**Europäisches Patentamt**

**European Patent Office**

**Office européen des brevets**

(11) Veröffentlichungsnummer: **0 281 015**

**A2**

# EUROPÄISCHE PATENTANMELDUNG

(21) Anmeldenummer: **88102799.9**

(22) Anmeldetag: **25.02.88**

(51) Int. Cl.4: **F01L 3/06 , F02F 1/42**

(30) Priorität: **26.02.87 DE 3706192**

(43) Veröffentlichungstag der Anmeldung:
**07.09.88 Patentblatt 88/36**

(84) Benannte Vertragsstaaten:
**CH DE FR GB IT LI SE**

(71) Anmelder: **Motoren-Werke Mannheim Aktiengesellschaft**
**Carl-Benz-Strasse 5**
**D-6800 Mannheim 1(DE)**

(72) Erfinder: **Baumbach, Kurt**
**Neuzenlache 9**
**D-6809 Viernheim(DE)**

(74) Vertreter: **Nau, Walter, Dipl.-Ing.**
**Klöckner-Humboldt-Deutz AG**
**Deutz-Mülheimer-Strasse 111**
**D-5000 Köln 80(DE)**

(54) **Drallsichel im Einlasskanal einer Brennkraftmaschine.**

(57)    1. Bei bekannten Drallsicheln kann nach dem Gießen des Zylinderkopfes der Drall bzw. die Wirbeldrehzahl des einströmenden Gases nicht mehr verändert werden. Die erfindungsgemäße Drallsichel soll auch nach der Fertigung des Zylinderkopfes eine leicht zu verändernde Wirbeldrehzahl aufweisen.

2. Erfindungsgemäß ist die Drallsichel (2) abdrehbar ausgebildet. Die Breite (b) der Drallsichel (2) liegt nach dem Gießen des Zylinderkopfes (11) oberhalb des für den gewünschten Dralls erforderlichen Sollwertes.

3. Zylinderkopf einer Brennkraftmaschine

FIG. 1

EP 0 281 015 A2

## Drallsichel im Einlaßkanal einer Brennkraftmaschine

Die Erfindung betrifft eine Drallsichel im Einlaßkanal einer Brennkraftmaschine nach dem Oberbegriff des ersten Anspruchs.

In der europäischen Patentanmeldung 0 049 075 ist eine Drallsichel im Einlaßkanal einer Brennkraftmaschine gezeigt, die einteilig mit dem Ventilsitzring ausgebildet ist. Die Drallsichel erstreckt sich dabei über einen Teil des Umfanges des Ventilsitzringes in den Einlaßkanal hinein und weist eine zur Ventilachse zeigende Abrißkante auf.

Nachteilig an dieser Anordnung ist, daß der Drall bzw. die Wirbeldrehzahl des einströmenden Gases nach dem Fertigen des Zylinderkopfes mit der Drallsichel am Ventilsitzring nicht mehr verändert werden kann.

Aufgabe der Erfindung ist es, eine leicht zu verändernde Wirbeldrehzahl des einströmenden Gases, auch nach der Fertigung des Zylinderkopfes, zu erreichen.

Erfindungsgemäß wird dies durch eine spanabhebend bearbeitbare Drallsichel erreicht, die in Strömungsrichtung vor dem Ventilsitzring angeordnet ist und die Breite der Drallsichel nach dem Gießen des Zylinderkopfes oberhalb des für den gewünschten Dralls bzw. der Wirbeldrehzahl erforderlichen Sollwertes liegt. Soll der Drall später verkleinert werden, so wird dies z. B. durch ein Abdrehen der Drallsichel erreicht. Stehenbleibende Ränder der Drallsichel brauchen dabei nicht entfernt zu werden, da diese praktisch keinen Einfluß auf den Drall ausüben. Durch das Abdrehen der Drallsichel ergibt sich eine andere Aufteilung des einströmenden Gases, derart, daß der Anteil des Gases, der die Laufbüchse tangential anströmt, verringert wird und somit der Drall abfällt.

Unter Abdrehen ist jede Spanabhebende Bearbeitungsmethode wie z. B. Drehen oder Fräsen verstanden.

Vorteilhafterweise grenzt die Drallsichel unmittelbar an den Ventilsitzring an. Dadurch ist einerseits das Abdrehen der Drallsichel erleichtert und andererseits eine gut tangentiale Anströmung der Laufbüchse erreicht.

Zweckmäßigerweise ist die zum Ventilsitzring zeigende Fläche der Drallsichel im rechten Winkel zur Ventilachse angeordnet und die Breite der Drallsichel nach dem Abdrehen entspricht ungefähr 20% des engsten Ventilsitzringdurchmessers. Für die Dicke der Drallsichel ist es ebenfalls vorteilhaft, wenn diese ungefähr 20% des engsten Ventilsitzringdurchmessers entspricht. Unter der Breite der Drallsichel ist die maximale Ausdehnung von der Ventilsitzinnenkante in den Einlaßkanal verstanden, während die Dicke der Drallsichel die Ausdehnung in Richtung Ventilachse von der zum Ventilsitzring gewandten Fläche bis zur Abrißkante beschreibt.

Um eine optimale Strömung im Einlaßkanal zu erhalten, ist es sinnvoll, daß die Einlaßkanalwand in Strömungsrichtung von der Drallsichel ausgebuchtet ist und kantenlos in die Drallsichel übergeht.

Vorteilhafterweise strömt das durch die Drallsichel umgelenkte Das die am Zylinderkopf angrenzende Zylinderlaufbüchse nahezu tangential an. Dazu schließt erfindungsgemäß die Abströmrichtung des durch die Drallsichel umgelenkten Gases mit der Zylindermittelebene einen Winkel α von ca. 70°-80° ein. Als Zylindermittelebene ist eine Ebene verstanden, die durch die Zylinderachse führt und senkrecht zur Maschinenlängsmittelebene angeordnet ist, die wiederum durch die Achsen aller Zylinder einer Zylinderreihe führt.

Der Winkel α muß je nach Höhe des angestrebten Enddralls festgelegt werden, wobei eine Vergrößerung des Winkels eine steilere Anströmung der Zylinderlaufbüchse und somit, bei gleicher Sicheldicke, einen Drallabfall des Grunddralls bewirkt.

In erfindungsgemäßer Ausführung weist jeder Zylinder zwei Einlaßventile auf, denen ein gemeinsamer Einlaßkanal zugeordnet ist, wobei ein erstes Einlaßventil mit seiner Ventilachse nahezu auf der Maschinenlängsmittelebene liegt, während ein zweites Einlaßventil mit seiner Ventilachse in Bezug auf die Zylinderachse etwa in einem Winkel von 45° zum ersten Einlaßventil angeordnet ist und der Einlaßkanal in Strömungsrichtung vor den Einlaßventilen in einen längeren Teilkanal zum ersten Einlaßventil und in einen kürzeren Teilkanal zum zweiten Einlaßventil übergeht.

Vorteilhafterweise befindet sich die Drallsichel im kürze ren Teilkanal, wobei die Drallsichel an der dem ersten Einlaßventil gegenüberliegenden Seite des zweiten Einlaßventils angeordnet ist.

Weitere Merkmale der Erfindung ergeben sich aus der Beschreibung und den Figuren, die eine Ausführungsform der Erfindung zeigen und nachfolgend näher beschrieben sind.

Es zeigt:

Fig. 1: eine erfindungsgemäße Drallsichel im Querschnitt durch den Einlaßkanal im Bereich des Ventilsitzringes einer Brennkraftmaschine,

Fig. 2: eine Ansicht der Bodenplatte eines Zylinderkopfes mit der erfindungsgemäßen Drallsichel.

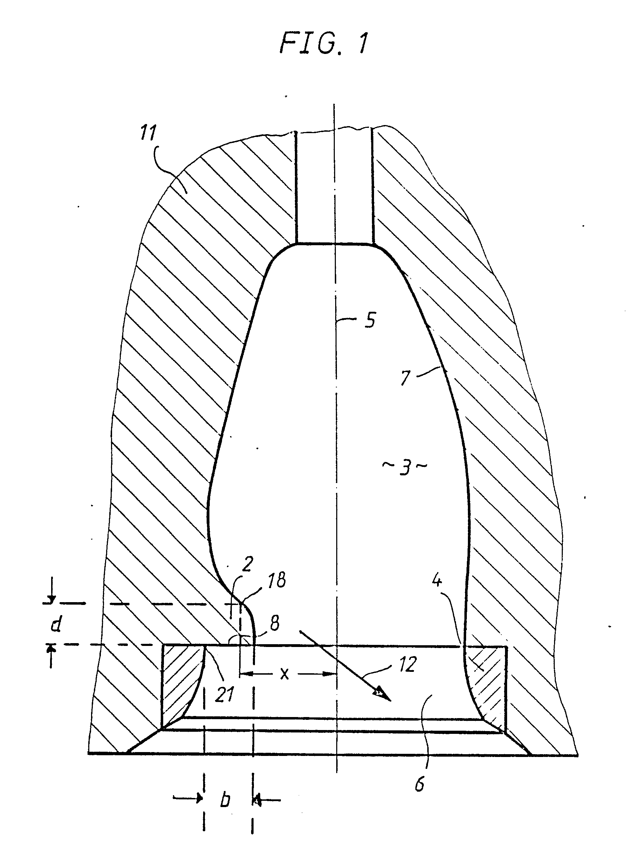

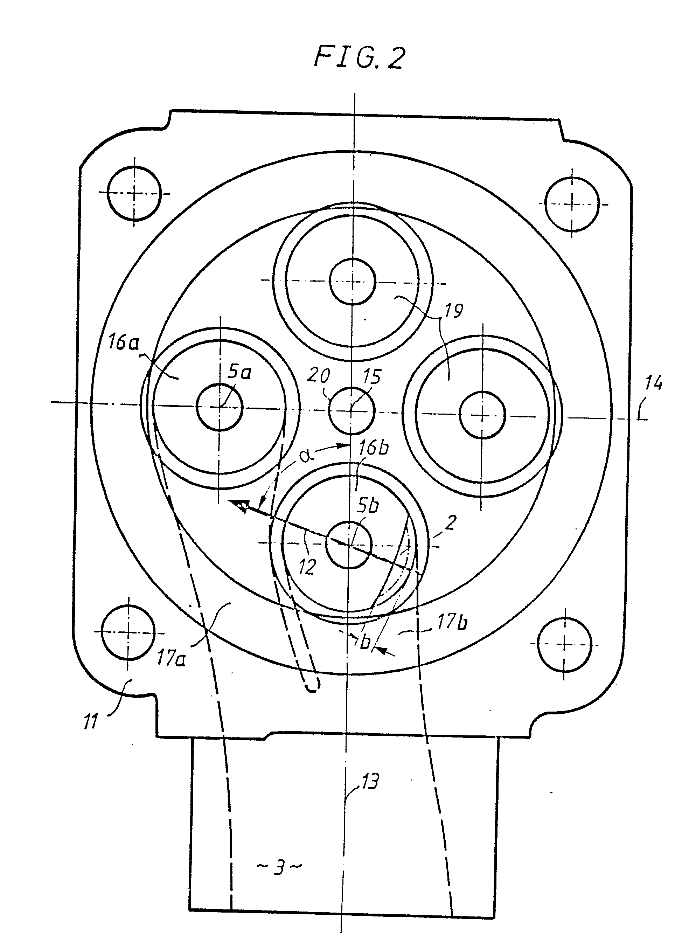

In der Fig. 1 ist eine erfindungsgemäße Drallsichel 2 im Querschnitt durch einen Einlaßkanal 3 einer Brennkraftmaschine im Bereich des Ventilsitzringes 4 gezeigt. Die Drallsichel 2 ist in Strömungsrichtung vor dem Ventilsitzring 4 angeordnet und grenzt unmittelbar an diesen an, wobei die zum Ventilsitzring 4 zeigende Fläche 8 der Drallsichel 2 im rechten Winkel zur Ventilachse 5 des nicht eingezeichneten Einlaßventils angeordnet ist. Ausgehend von der Einlaßkanalwand 7 erstreckt sich die Drallsichel 2 über einen Teil des Umfanges der Einlaßkanalwand 7 in den Einlaßkanal 3 hinein und weist eine zur Ventilachse 5 zeigende Abrißkante 18 auf. Die Dicke d der Drallsichel, d. h. die Ausdehnung in Richtung Ventilachse 5 von der zum Ventilsitzring 4 gewandten Fläche 8 bis zur Abrißkante 18 entspricht in etwa 20% des engsten Ventilsitzringdurchmessers. Die Breite b der Drallsichel, d. h. die maximale Ausdehnung von der Ventilsitzinnenkante 21 in den Einlaßkanal 3 hinein, entspricht nach dem Abdrehen vorteilhafterweise in etwa 20% des engsten Ventilsitzringdurchmessers. Die Breite b ist ansonsten über den Umfang gesehen unterschiedlich ausgebildet, wobei im Umfangsrichtung des Ventilsitzringes 4 gesehen ist der Mitte der Drallsichel 2 die Breite b am größten ist und zum Rand hin abnimmt (siehe Fig. 2).

Zur Erzielung einer geeigneten Strömung ist die Einlaßkanalwand 7 im Strömungsrichtung vor der Drallsichel 2 ausgebuchtet und geht kantenlos in die Drallsichel über.

Erfindungsgemäß ist die Drallsichel 2 abdrehbar ausgebildet. Ferner liegt die Breite b der Drallsichel 2 nach dem Gießen des Zylinderkopfes 11 oberhalb des für den gewünschten Dralls erforderlichen Sollwertes. Durch diese Maßnahme läßt sich der gewünschte Drall durch späteres Abdrehen der Drallsichel exakt einstellen. Dies ist nicht nur für den Versuch bzw. die Entwicklung von außerordentlicher Wichtigkeit, sondern auch für die Serienfertigung.

Für die praktische Anwendung ist die Versperrung des Einlaßkanals 3 bzw. der Einlaßöffnung 6 durch die Drallsichel 2 ein wichtiges Maß. Diese Versperrung kann durch den Abstand X (siehe Fig. 1) der Abrißkante 18 der Drallsichel 2 von der Ventilachse 5 angegeben werden. Durch das Abdrehen der Drallsichel 2 wird die Versperrung geringer und damit X größer, wodurch der Anteil des einströmenden Gases, der die Zylinderwand bzw. die Zylinderlaufbuchsenwand tangential anströmt, geringer wird. Dies bedingt eine Abnahme des Dralls.

In der Fig. 1 ist mit einem Pfeil die Abströmrichtung 12 des durch die Drallsichel 2 umgelenkten Gases angedeutet. Vorteilhafterweise strömt das umgelenkte Gas die Zylinderwand bzw. die Zylinderlaufbüchse nahezu tangential an.

Fig. 2 zeigt eine Ansicht der Bodenplatte eines Zylinderkopfes 11 mit der Anordnung der erfindungsgemäßen Drallsichel 2. Jeder Zylinder weist zwei Einlaßventile 16a, b auf, denen ein gemeinsamer Einlaßkanal 3 zugeordnet ist, wobei ein erstes Einlaßventil 16a mit seiner Ventilachse 5a auf der Maschinenlängsmittelebene 14 liegt, während ein zweites Einlaßventil 16b mit seiner Ventilachse 5b in Bezug auf die Zylinderachse 15 in etwa in einem Winkel von 45° zum ersten Einlaßventil 16a angeordnet ist. Damit liegt das zweite Einlaßventil 16b mit seiner Ventilachse 5b auf der Zylindermittelebene 13.

Des weiteren sind zwei Auslaßventile 19 in Bezug auf die Zylinderachse 15 spiegelbildlich zu den beiden Einlaßventilen 16a, b angeordnet. Zwischen den Gaswechselventilen 16, 19 ist eine Einspritzdüse 20 angeordnet. In vorteilhafter Ausführungsform ist die erfindungsgemäße Drallsichel 2 für Dieselbrennkraftmaschinen und Gasmotoren geeignet.

Der Einlaßkanal 3 geht in Strömungsrichtung vor den Einlaßventilen 16a, b in einen längeren Teilkanal 17a zum ersten Einlaßventil 16a und in einen kürzeren Teilkanal 17b zum zweiten Einlaßventil 16b über. Die Drallsichel 2 befindet sich im kürzeren Teilkanal 17b und ist an der dem ersten Einlaßventil 16a gegenüberliegenden Seite des zweiten Einlaßventils 16b angeordnet. Die maximale Breite b der Drallsichel 2 ist in den Figuren 1 und 2 eingezeichnet.

In der Fig. 2 ist auch sehr gut die Abströmrichtung 12 des durch die Drallsichel 2 umgelenkten Gases zu erkennen. Diese Abströmrichtung 12 ist wie in der Fig. 1 durch einen Pfeil dargestellt. Vorteilhafterweise schließt die Abströmrichtung 12 des durch die Drallsichel 2 umgelenkten Gases mit der Zylindermittelebene 13 einen Winkel $\alpha$ von ca. 70°-80° ein.

Durch die sichelförmige Einschnürung des Einlaßkanals direkt oberhalb des Ventilsitzringes 4 wird der überwiegende Teil des einströmenden Gases auf die der Drallsichel 2 gegenüberliegenden Seite gelenkt und so eine Hauptströmung am Ventil hervorgerufen. Durch die eben beschriebene Winkellage der Drallsichel 2 zur Zylindermittelebene 13 wird die Zylinderwand bzw. die Laufbüchse nahezu tangential angeströmt. Der Anströmwinkel $\alpha$ zur Buchsenwand und die Breite b der Drallsichel 2 bestimmen die Höhe des Dralls. Durch Festlegung des Winkels $\alpha$ und der Breite b der Drallsichel 2 wird vor dem Gießen des Zylinderkopfes der Drall so festgelegt, daß er über dem später gewünschten Drall liegt. Der dann später gewünschte Drall wird durch Abdrehen der Drallsichel 2 erreicht, wobei stehenbleibende Ränder der Drallsichel 2 praktisch keinen Einfluß auf den Drall ausüben. Unter Abdrehen ist jedes spanabhebende Verfahren verstanden.

Bei der Grundauslegung der Drallsichel 2 vor dem Gießen des Zylinderkopfes ist auf ein vernünftiges Verhältnis der Winkellage $\alpha$ der Drall-

sichel und der Breite b der Drallsichel 2 zu achten. So darf z. B. die Breite b der Drallsichel 2 nicht zu klein sein, damit noch genügend Material zum späteren Abdrehen vorhanden ist. Außerdem ist bei einer zu geringen Breite b der Drallsichel 2 ein instabiles Strömungsverhalten festzustellen. Andererseits ist die Breite b der Drallsichel 2 nicht zu lang auszuführen, da sich dadurch eine zu große Versperrung des Einlaßkanals und damit ein zu großer Abfall der Durchflußbeiwerte ergibt.

Versuche mit dieser erfindungsgemäßen Drallsichel 2 zeigten eine verhältnismäßig große Unempfindlichkeit gegenüber eventuellen Gußschwankungen. Außerdem konnten die Durchflußbeiwerte gegenüber dem Einsatz von Drallnasenkanälen gesteigert werden.

## Ansprüche

1. Drallsichel (2) im Einlaßkanal (3) einer Brennkraftmaschine mit einem am Ende des Einlaßkanals (3) angeordneten Ventilsitzring (4), dem ein Einlaßventil zugeordnet ist, welches im geöffneten Zustand den Einlaßkanal (3) mit dem Brennraum der Brennkraftmaschine verbindet, wobei eine durch die Ventilachse (5) führende Ebene die vom Ventilsitzring (4) umschlossene Eintrittsöffnung (6) für das einströmende Gas in zwei Segmente aufteilt, von denen eines durch die Drallsichel (2) eine kleinere Öffnung aufweist als das andere und sich die Drallsichel (2) über einen Teil des Umfanges von der Einlaßkanalwand (7) in den Einlaßkanal (3) erstreckt und eine zur Ventilachse (5) zeigende Abrißkante (18) aufweist,
dadurch gekennzeichnet, daß die Drallsichel (7) spanabhebend bearbeitbar ausgebildet ist, in Strömungsrichtung vor dem Ventilsitzring (4) angeordnet ist und die Breite (b) der Drallsichel (2) nach dem Gießen des Zylinderkopfes oberhalb des für den gewünschten Drall erforderlichen Sollwertes liegt.

2. Drallsichel nach Anspruch 1,
dadurch gekennzeichnet, daß die Drallsichel (2) unmittelbar an den Ventilsitzring (4) angrenzt.

3. Drallsichel nach Anspruch 1 oder 2,
dadurch gekennzeichnet, daß die zum Ventilsitzring (4) zeigende Fläche (8) der Drallsichel (2) im rechten Winkel zur Ventilachse (5) angeordnet ist.

4. Drallsichel nach einem der Ansprüche 1 bis 3,
dadurch gekennzeichnet, daß die Breite (b) der Drallsichel (2) nach dem spanabhebenden Bearbeiten in etwa 20% des engsten Ventilsitzringdurchmessers entspricht.

5. Drallsichel nach einem der Ansprüche 1 bis 4,
dadurch gekennzeichnet, daß die Dicke (d) der Drallsichel (2) in etwa 20% des engsten Ventilsitzringdurchmessers entspricht.

6. Drallsichel nach einem der Ansprüche 1 bis 5,
dadurch gekennzeichnet, daß die Einlaßkanalwand (7) in Strömungsrichtung vor der Drallsichel (2) ausgebuchtet ist und kantenlos in die Drallsichel (2) übergeht.

7. Drallsichel nach einem der Ansprüche 1 bis 6, mit einer am Zylinderkopf (11) angrenzenden Zylinderlaufbüchse,
dadurch gekennzeichnet, daß das durch die Drallsichel (2) umgelenkte Gas die Zylinderlaufbüchse nahezu tangential anströmt.

8. Drallsichel nach einem der Ansprüche 1 bis 6,
dadurch gekennzeichnet, daß die Abströmrichtung (12) des durch die Drallsichel (2) umgelenkten Gases mit der Zylindermittelebene (13) einen Winkel α von ca. 70-80° einschließt.

9. Drallsichel nach einem der Ansprüche 1 bis 8,
dadurch gekennzeichnet, daß jeder Zylinder zwei Einlaßventile aufweist, denen in gemeinsamer Einlaßkanal (3) zugeordnet ist, wobei ein erstes Einlaßventil (16a) mit seiner Ventilachse (5a) nahezu auf der Maschinenlängsmittelebene (14) liegt, während ein zweites Einlaßventil (16b) mit seiner Ventilachse (5b) in Bezug auf die Zylinderachse (15) in etwa in einem Winkel von 45° zum ersten Einlaßventil (16a) angeordnet ist.

10. Drallsichel nach Anspruch 9,
dadurch gekennzeichnet, daß der Einlaßkanal (3) in Strömungsrichtung vor den Einlaßventilen (16a, b) in einen längeren Teilkanal (17a) zum ersten Einlaßventil (16a) und in einen kürzeren Teilkanal (17b) zum zweiten Einlaßventil (16b) übergeht.

11. Drallsichel nach Anspruch 10,
dadurch gekennzeichnet, daß sich die Drallsichel (2) im kürzeren Teilkanal (17b) befindet, wobei die Drallsichel (2) an der dem ersten Einlaßventil (16a) gegenüberliegenden Seite des zweiten Einlaßventils (17b) angeordnet ist.

FIG. 1

# FIG.2